# EUROPÄISCHE PATENTSCHRIFT

(11) **EP 1 062 525 B1**
(45) Veröffentlichungstag und Bekanntmachung des Hinweises auf die Patenterteilung: **14.05.2003**
(21) Anmeldenummer: 99905119.6
(22) Anmeldetag: 04.03.1999
(51) Int. Cl.: G01S 17/89, G01S 17/02

(54) **VERFAHREN ZUR ÜBERWACHUNG VON OBJEKTEN BZW. EINES OBJEKTRAUMES**
METHOD FOR MONITORING OBJECTS OR AN OBJECT AREA
PROCEDE POUR SURVEILLER DES OBJETS OU UN ESPACE OBJET

(30) Priorität: 10.03.1998 AT 41198; 08.10.1998 AT 168198
(43) Veröffentlichungstag der Anmeldung: 27.12.2000
(73) Patentinhaber: Riegl Laser Measurement Systems Gmbh, 3580 Horn (AT)
(72) Erfinder: STUDNICKA, Nikolaus, A-1190 Wien (AT); ULLRICH, Andreas, A-3003 Gablitz (AT)
(74) Vertreter: Révy von Belvárd, Peter
(86) Internationale Anmeldenummer: IB9900371
(87) Internationale Veröffentlichungsnummer: WO99046614

(56) Entgegenhaltungen:
- WO-A-97/11353
- US-A- 5 361 217
- US-A- 5 528 354
- US-A- 5 644 386
- CHRISTIE S ET AL: "DESIGN AND DEVELOPMENT OF A MULTI-DETECTING TWO-DIMENSIONAL RANGINGSENSOR" MEASUREMENT SCIENCE AND TECHNOLOGY, Bd. 6, Nr. 9, 1. September 1995, Seiten 1301-1308, XP000528786

## Beschreibung

Die Erfindung betrifft ein Verfahren nach dem Oberbegriff des Anspruches 1 sowie auf eine Vorrichtung zur Durchführung dieses Verfahrens mit den Oberbegriffsmerkmalen des Anspruches 9.

Es ist also ein opto-elektronischer Entfernungsmesser mit einer Sendeeinrichtung zum Aussenden von optischen Signalen vorgesehen, wobei dieser letztere Ausdruck im allgemeinsten Sinne als elektromagnetische Strahlung im sichtbaren oder unsichtbaren Bereich verstanden werden soll. Dieser Entfernungsmesser ermittelt aus der Laufzeit (im engeren Sinne) bzw. der Phasenlage (Doppler-System) des ausgesandten optischen Signals Entfernungswerte, ist also ein Laufzeitmesser im weiteren Sinne.

Bei einem solchen Verfahren ist es Ziel der vorliegenden Erfindung, seine Einsetzbarkeit für verschiedene praktische Bereiche zu erweitern und zu verbessern. Dies gelingt mittels der kennzeichnenden Merkmale des Anspruches 1. Ein solches Verfahren eignet sich besonders für Einsatzgebiete, wie die Aufnahme von Unfallorten oder der Umgebung einer kriminellen Tat, aber ebenso für die Überwachung von Objekten und Objekträumen. Ein weiteres Einsatzgebiet ist die Aufnahme von Kulturgütern, wie Bauten oder die Überwachung von Veränderungen der Umwelt. Die den Entfernungwerten zugeordneten weiteren Werte können Amplitudenwerte oder über einen dem Scanner nachgeschalteten Strahlenteiler gewonnene passive Bildsignale sein oder aber auch Meßwerte aus einer zeitlich früheren Messung, die mit den aktuellen Meßwerten verknüpft werden, insbesondere um (z.B. zeitliche) Änderungen an Entfernungsbildern erkennen zu können.

Gerade im letzteren Bereich ergeben sich sehr geringe Veränderungen über die Zeit, die schwer zu erkennen sind. Dieselbe Schwierigkeit des Erkennens ergibt sich bei Bewegungen von Strukturen, die auf Grund ihres geringen oder überhaupt fehlenden Kontrastes visuell bzw. optisch nicht detektierbar sind, wie z. B. von Schnee- oder Geröllfelder, aber auch in schlecht ausgeleuchteten, zu überwachenden Räumen. Zur Bewältigung dieser speziellen Probleme werden erfindungsgemäß in einer Weiterbildung die Merkmale des Anspruches 2 vorgeschlagen. Dabei kann die Mischung additiv, multiplikativ od.dgl. erfolgen, wird aber zweckmäßig in Form einer Differenzbildung durchgeführt.

Das Wesen dieser Weiterbildung der Erfindung ist dabei darin zu sehen, daß nach einer ersten Abtastung des Objektfeldes und der Auswertung der Daten diese als Referenz-Datensatz in einem Speicher abgelegt werden und die Datensätze folgender Abtastungen mit dem Referenz-Datensatz verknüpft werden, wobei vorzugsweise ein Differenzdatensatz, insbesondere codiert dem Referenz- oder dem aktuellen Datensatz überlagert und in Bildform an einem Monitor angezeigt bzw. ausgegeben wird. Ein solches Verfahren kann einerseits in Alarmsystemen angewendet werden und zum Schutz gegen Einbruch und sonstiges unbefugtes Eindringen oder auch zum Aufdecken von Attentatsversuchen durch Deponieren von Sprengkörpern dienen. Andererseits ist dieses Verfahren geeignet, mit sehr geringer Geschwindigkeit verlaufende Veränderungen sichtbar zu machen, wie z.B. Rutschungen von Berghängen oder Abraumhalden, sowie Setzungserscheinungen von Geländen.

Die Anwendung dieser Variante des erfindungsgemäßen Verfahrens in Alarmanlagen hat gegenüber dem bekannten Einsatz von Videosystemen den Vorteil, daß eine Ausleuchtung des Objektes bzw. Objektraumes nicht erforderlich ist, so daß die Tatsache einer Überwachung für einen Eindringling auch nicht zu erkennen ist. Das erfindungsgemäße Verfahren ist auch gegenüber Täuschungs- und Manipulationsversuche weitestgehend unempfindlich, da diese nicht Oberflächenstrukturen vergleicht, sondern dreidimensionale Bilder.

Nun wird schon mit bekannten Einrichtungen, welche das Verfahren nach dem Oberbegriff des Anspruches 1 benutzen, am Bildschirm eines Monitors ein sogenanntes Entfernungsbild erzeugt, das in Falschfarben die jeweiligen Entfernungen von der Aufnahmeeinrichtung aus angibt. Für viele Anwendungen ist ein solches Entfernungsbild eine sehr zweckmäßige Darstellung, die einen guten Überblick über in die Tiefe gestaffelte Objekte gibt. Naturgemäß kann aber das Entfernungsbild Strukturen nicht oder nicht deutlich genug auflösen, die keine oder nur eihe geringe räumliche Tiefe aufweisen. Aus diesem Grund konnte das Verfahren nach dem Stande der Technik für die Beweissicherung nach Verkehrsunfällen bisher keine Verwendung finden, da wichtige Beweiselemente, wie Bremsspuren, Splitter und andere kleine Fahrzeugteile, sowie von den Beamten auf der Fahrbahn angebrachte Markierungen im Entfernungsbild nicht aufgelöst werden können. Im allgemeinen wird daher die Situation nach einem Verkehrsunfall nach wie vor manuell, z.B. mit einem Meßrad, vermessen und photographisch festgehalten.

Man hat auch vorgeschlagen, die Vermessung einer Unfall-Situation mit Hilfe von Laser-Entfernungsmessern durchzuführen, wobei von einem Standort aus zunächst Punkte angemessen werden, deren Position in Karten oder Straßenplänen angegeben ist, z.B. Gebäude, Verkehrszeichen etc., und anschließend die in den Unfall verwickelten Kraftfahrzeuge und andere für den Unfallhergang relevante Objekte. Wird bei diesem oder bei dem rein manuellen Verfahren das eine oder andere Maß nicht aufgenommen, so ist es im allgemeinen sehr schwierig, wenn nicht unmöglich, die Position bestimmter Objekte nachträglich exakt zu bestimmen.

Ein weiterer Nachteil der beiden oben beschriebenen Methoden ist, daß sie außerordentlich zeitintensiv sind, so daß die Unfallstelle für einen langen Zeitraum blockiert ist und es im allgemeinen zu schwerwiegenden Verkehrsbehinderungen kommt. All diese speziellen Probleme werden in einfacher Weise durch die Merkmale des Anspruches 5 gelöst.

Infolge von Abschattungen durch einzelne Objekte im aufzunehmenden Raum kann im allgemeinen eine einzelne Aufnahme keine komplette 3-D Information dieses Raumes liefern. Vorzugsweise werden daher mindestens zwei Aufnahmen des im wesentlichen gleichen Raumes aus verschiedenen Blickwinkeln hergestellt. Bei der anschließenden Bildauswertung werden mehrere idente Punkte in den verschiedenen Bildern als solche gekennzeichnet, so daß der elektronische Rechner bei der folgenden Bildverarbeitung aus den Daten der verschiedenen Bilder einen kompletten 3-D-Datensatz generieren kann. Es ist daher möglich, Bilder der aufgenommenen Szene bei der späteren Auswertung aus beliebigen Blickwinkeln auf einem Bildschirm oder Ausdruck zu zeigen, insbesondere ist es möglich, eine Ansicht in Vogelschau, in Perspektive oder in Parallelprojektion auszugeben, so daß der auswertende Beamte automatisch eine einem Luftbild ähnliche Darstellung des aufgenommenen Raumes erhält. Da in dem 3-D-Datensatz zu jedem Punkt des aufgenommenen Raumes die Raumkoordinaten als Referenz vorliegen, können zusätzlich zu der, gegebenenfalls maßstäblichen, graphischen Darstellung wichtige Bildelemente, z.B. mittels eines Cursors am Computer-Bildschirm, markiert und die Punktkoordinaten und/oder die Abstände zu anderen gekennzeichneten Punkten ausgegeben werden.

Nach dieser Verfahrensvariante werden also von einem Unfallort im allgemeinen zwei oder drei Aufnahmen hergestellt. Die Unfallstelle kann unmittelbar nach den Aufnahmen und einer eventuellen ersten Kontrolle der Daten geräumt und wieder für den Verkehr freigegeben werden, da alle Auswertungen und auch Vermessungen zu einem späteren Zeitpunkt aus den aufgezeichneten Daten durchgeführt werden können.

Eine Vorrichtung zur Durchführung des erfindungsgemäßen Verfahrens und insbesondere des Verfahrens nach Anspruch 5 weist vorteilhaft die kennzeichnenden Merkmale des Anspruches 9 auf. Dabei ist es durch die Verwendung eines oder mehrerer hochempfindlicher Photoempfänger möglich, eine Unfallszene od.dgl. auch bei Dunkelheit ohne aufwendige Ausleuchtung aufzuzeichnen.

Weitere Merkmale der Erfindung ergeben sich aus den verschiedenen Unteransprüchen und der Beschreibung eines Ausführungsbeispieles, wobei auf die Zeichnung Bezug genommen wird, wobei in
Fig. 1 schematisch und teilweise in Form eines Blockschaltbildes eine Einrichtung gemäß der Erfindung dargestellt ist; und die
Fig. 2 beispielhaft ein mit der neuen Vorrichtung generiertes Bild zeigt.

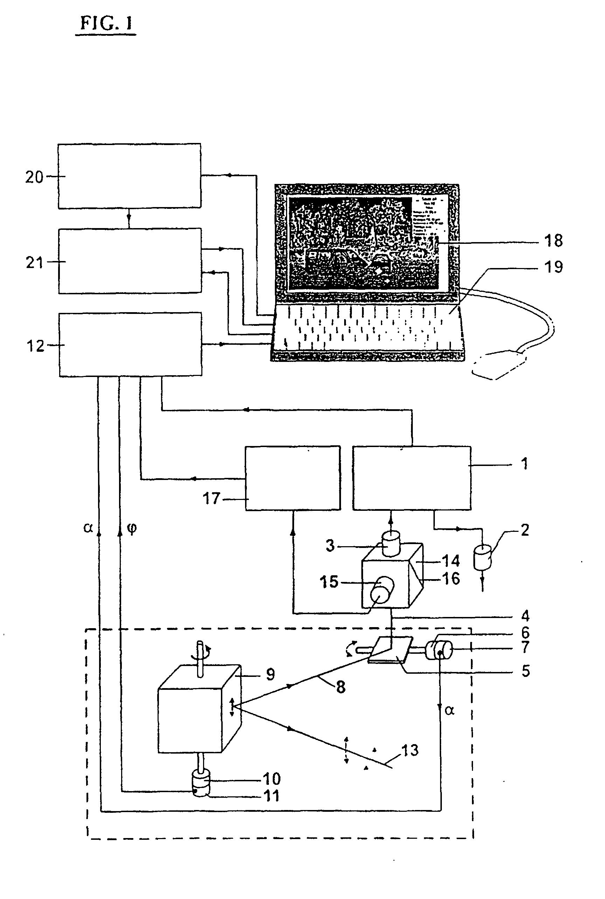

Die Einrichtung gemäß Fig. 1 umfaßt einen aktiven optischen Kanal 1, der im wesentlichen aus einem Laser-Entfernungsmesser besteht, wie er beispielsweise in der Österreichischen Patentschrift Nr. ( Patentanmeldung A 1525 / 97) beschrieben ist. Der aktive Kanal weist eine Sende-Diode 2 sowie eine Empfangs-Diode 3 auf. Durch die Sende-Diode werden Folgen extrem kurzer Laser-Impulse ausgesendet, die an Objekten im Aufnahmeraum reflektiert werden. Die in Richtung der Aufnahmeeinrichtung reflektierte Strahlung wird durch die Empfangs-Diode 3 aufgenommen. Im Laser-Entfernungsmesser, bzw. im aktiven Kanal 1 der Einrichtung wird aus der Laufzeit bzw. der Phasenlage der Laser-Impulse die Entfernung zu dem jeweiligen Objekt ermittelt. Der Sende-Diode 2 und der Empfangs-Diode 3 ist jeweils ein optisches Scan-System vorgeschaltet, mit dessen Hilfe der Objektraum abgetastet wird. Im Interesse einer möglichst übersichtlichen Darstellung ist nur die Scan-Einrichtung für die Empfangs-Diode 3 dargestellt und im folgenden beschrieben.

Der auf die Diode 3 auftreffende, entlang der optischen Achse gleichen Bezugszeichens verlaufende Strahl 4 wird beispielsweise durch einen Schwingspiegel 5 abgelenkt, der durch einen Aktor 6 angetrieben wird. Ein mit dem Aktor 6 verbundener Winkelgeber 7 gibt ein Signal α ab, das von der Stellung des Spiegels 5 abhängt. Der durch den Schwingspiegel 4 abgelenkte Strahl 8 fällt entlang der optischen Achse 8 auf die Spiegelfläche eines Spiegelprismas 9, das von einem Motor 10 mit hoher Geschwindigkeit angetrieben wird. Die jeweilige Winkelposition des Spiegelprismas 9 wird durch einen Sensor 11 gemessen; die entsprechenden Signale ϕ werden der Signalverarbeitungsstufe 12 zugeleitet. Durch die Bewegung des Spiegels 4 und des Prismas 9 wird der Objektraum durch den Strahl 13 entlang einer weiteren optischen Achse zeilenförmig abgetastet.

Die Abtasteinrichtung für die Sende-Diode ist analog aufgebaut und tastet den Objektraum in beiden Richtungen synchron und mit gleicher Phasenlage ab, so daß der Strahl 13 und der entsprechende Strahl der Sende-Einrichtung im wesentlichen parallel verlaufen. Vorteilhaft weisen die beweglichen optischen Elemente 4 und 9 für den Sende- und Empfangskanal die gleichen Antriebselemente 6 bzw. 10 auf. Es kann zweckmäßig sein, den Spiegel 4 und das Prisma 9 axial zu verlängern, so daß Sende- und Empfangskanal dieselben Ablenkeinrichtungen benutzen können. In einer anderen Ausführungsform der Erfindung kann der Laser-Entfernungsmesser mit seinen Sende- und Empfangsoptiken und einem rotierenden Spiegelprisma zu einer starren Einheit zusammengefaßt sein, die in ihrer Gesamtheit zur Abtastung eines Objektraumes verschwenkt wird.

Durch den aktiven Kanal 1 (Laser-Entfernungsmesser) wird in Kombination mit der Scan-Einrichtung der Objektraum abgetastet, wobei zu jeder, über die Werte der Winkelgeber 7 und 11 definierten Raumrichtung ein Entfernungswert ermittelt wird. Der entsprechende Datensatz, bestehend aus den Bildkoordinaten und dem zugehörigen Entfernungswert, wird einer als Prozessor bzw. Rechner ausgebildeten und zweckmäßig mit zugehörigen Speichern versehenen Signalverarbeitungs- oder Auswertestufe 12 zugeleitet, welche aus den Daten ein sogenanntes Entfernungsbild generiert, das auf einem Monitor 18, einem Drucker (z.B. einem Farbdrucker) oder einer anderen Bildausgabe-Einrichtung zur Anzeige gebracht werden kann. Das Entfernungsbild kann in Grauwerten oder in Falschfarben ausgegeben werden, wobei eine Grau- oder Farbskala einer Entfernungsskala zugeordnet wird. Zusätzlich können durch Anklicken eines Bildelementes dessen Entfernung oder dessen Raumkoordinaten direkt angezeigt werden.

Zusätzlich zu dem Entfernungsbild kann aus dem aktiven Kanal noch ein Amplitudenbild gewonnen werden, wobei jedem Bildelement die Amplitude der reflektierten und von der Empfangseinrichtung empfangenen Laser-Impulse unabhängig von dessen Entfernungswert zugeordnet wird. Da dieses Bild Strukturen in Flächen mit gleicher Entfernung zeigt, ist die Auswertung der Bilder wesentlich einfacher, vor allem dann, wenn das Entfernungsbild dem Amplitudenbild überlagert wird.

Noch günstigere Verhältnisse sind erzielbar, wenn der Objektraum gleichzeitig mit dem aktiven Kanal mit einem passiven Empfangskanal gescannt wird, wie die im Österreichischen Patent Nr. (Patentanmeldung A-411/98) vorgeschlagen worden ist. Eine solche Einrichtung ist in der Zeichnung dargestellt und wird nachfolgend im einzelnen beschrieben:

Im Strahlengang des Strahles 4 ist zwischen dem Schwingspiegel 5 und der Empfangs-Diode 3 ein Strahlen-Teilungsprisma 14 angeordnet, welches einen Teil der einfallenden Strahlung einer zweiten Photo-Diode 15 zuleitet. Vorteilhaft weist die Photo-Diode 15 eine unterschiedliche spektrale Empfindlichkeit auf verglichen mit der Diode 3, die in ihrer spektralen Empfindlichkeit der Sende-Diode 2 angepaßt ist. Es kann zweckmäßig sein, eine Diode für langwelligeres Infra-Rot einzusetzen, um eine bessere Durchdringung bei Nebel zu erzielen. Für andere Anwendungsfälle kann eine Photo-Diode für den sichtbaren Bereich des Spektrums verwendet werden. Anstelle einer einzigen Photo-Diode kann auch ein Photo-Diodentripel mit Empfindlichkeiten entsprechend den drei Grundfarben eingesetzt werden. Die spektralen Empfindlichkeiten können in bekannter Weise durch vorgesetzte Farbfilter oder dichroiische Spiegel angepaßt werden. Vorteilhaft weist auch der Strahlenteiler 15 eine dichroiische Spiegelfläche 16 auf, durch welche die Strahlung der Laser-Diode 2 im wesentlichen ungehindert passieren kann, während Strahlung, für welche die Diode 15 eine maximale Empfindlichkeit aufweist, optimal reflektiert wird.

Um eine solche Einrichtung auch bei Dunkelheit ohne Zusatzbeleuchtung einsetzen zu können, kann der Photo-Diode 15 ein an sich bekannter, und hier deshalb nicht dargestellter, Bildverstärker vorgeschaltet oder an Stelle einer Photo-Diode ein hochempfindlicher Photo-Empfänger eingesetzt werden, wie es beim vorliegenden Ausführungsbeispiel der Fall ist.

Die von der Photo-Diode 15 bzw. dem jeweiligen Photo-Empfänger abgeleiteten Signale beschreiben in ihrer Gesamtheit ein passives Bild des Objektraumes, das deckungsgleich mit dem Entfernungsbild, aber beleuchtungsmäßig von dem Laserlicht der Sende-Diode unabhängig ist.

Die Signale werden in der mit "Passiver Kanal" bezeichneten Stufe 17 bearbeitet und der Signalverarbeitungsstufe 12 zugeführt., in welcher nun zu jedem, durch die Signale der Sensoren 7 und 11 definierten Punkt nicht nur eine Entfernungs- sondern auch eine Helligkeits- und gegebenenfalls eine Farbinformation vorliegt. Diese letzteren Informationen werden in Speichern der Stufe 12 zunächst abgelegt. In der Stufe 12 werden dann die Daten weiter aufbereitet.

Die Ausgangssignale der Signal- und Datenverarbeitungsstufe werden einer Steuer- und Display-Einheit 19 bzw. 18 zugeführt. Die Daten sowohl des aktiven als auch des passiven Kanals können bildhaft dargestellt, eventuell in Falschfarbentechnik, vorzugsweise überlagert auf einem Monitor gezeigt werden. Durch entsprechende Befehle können bestimmte Entfernungsbilder oder Entfernungsbildfolgen ausgewählt und in einem Referenz-Daten-Speicher 20 abgelegt werden. In einer Datenverarbeitungsstufe 21 werden die im Referenzdatenspeicher 20 abgelegten Daten eines Entfernungsbildes mit denen von aktuellen Entfernungsbild-Daten verknüpft, d.h. subtrahiert bzw. einander überlagert, die dann von der Steuereinheit 19 durchgeschaltet werden.

Im vorliegenden Ausführungsbeispiel wird ein Differenzbild erzeugt, das nur jene Bildelemente enthält, deren Position und/ oder Entfernung gegenüber dem Referenzbild verändert sind. Um dieses Differenzbild leichter dem Objektraum zuordnen zu können, empfiehlt es sich, dieses vorzugsweise dem Referenz-Entfernungsbild oder einem zugehörigen Amplitudenbild bzw. einem aus dem passiven Kanal abgeleiteten Referenz-Bild zu überlagern. Das Differenzbild wird vorzugsweise codiert, z. B. in Falschfarben und einem Grauwert-Referenzbild überlagert. Vorteilhaft erfolgt die Falschfarbencodierung in der Weise, daß bei Annäherung eines Objektes dieses mit zunehmender Entfernungsänderung in einem sich intensivierenden Rot, bei Vergrößerung der Entfernung in einem sich intensivierenden Blau gezeigt werden. Die Codierung des Differenzbildes und die Überlagerung über ein zu definierendes weiteres Bild kann über die Steuereinheit 19 festgelegt werden, welche die Stufe 21 entsprechend ansteuert.

Die Arbeitsweise dieser Ausführungsform des erfindungsgemäßen Verfahrens wird im folgenden näher erläutert:

Bei Inbetriebnahme der entsprechenden Anlage wird zunächst durch den Laser-Entfernungs-Scanner ein Entfernungsbild erzeugt und am Monitor 18 angezeigt. Über die Steuereinheit 19 kann ein beliebiges Referenzbild definiert und im Speicher 20 abgelegt werden. Über die Steuereinheit können weitere Parameter wie Abtastfrequenz, Schwellwerte für eine automatische Überwachung der Differenzbilder etc. festgelegt werden. Es ist auch möglich, das Referenzbild automatisch zu aktualisieren, um langsame Veränderungen bewußt aus der Anzeige auszublenden. Im Betrieb wird nun der aktuelle, vom Laser-Entfernungs-Scanner gelieferte Datensatz mit dem im Speicher 20 abgelegten Datensatz verglichen. Der auf diese Weise erzeugte Differenz-Datensatz wird entweder an einem Monitor bildlich dargestellt und/oder aber in der Steuereinheit 19 mit einem definiertem Algorithmus zu einer Kenngröße verarbeitet. Diese wird jeweils einem festzulegenden Grenzwert gegenübergestellt. Bei Überschreiten des Grenzwertes wird automatisch ein Alarm ausgelöst. Dadurch ist es möglich, eine solche Anlage auch ohne besonderes menschliches Zutun zu betreiben.

Bei Anwendungen in Sicherheitssystemen besteht der besondere Vorteil dieses Verfahrens darin, daß es einerseits sehr flexibel ist: denn bei Scharfmachen der Alarmanlage wird der Objektraum mit dem Laser-Entfernungs-Scanner aufgezeichnet und dieses Bild als Referenz abgelegt. Jede Veränderung dieses räumlichen Bildes wird angezeigt oder löst einen Alarm aus. Das System ist anderseits völlig unempfindlich gegenüber wechselnden Umweltbedingungen, wie Beleuchtungsverhältnissen, und es ist vor allem sicher gegen Täuschungsversuche, Tarnungen etc., da z.B. ein schwarz gekleideter Eindringling vor einem schwarzen Hintergrund visuell nicht wahrnehmbar ist, sehr wohl aber im Entfemungsbild, da er die 3-D Struktur des Objektraumes verändert.

Das System eignet sich aber auch zu Überwachung von Objekten, die sehr kontrastarm sind oder überhaupt keinen Kontrast aufweisen, wie z.B. Schnee- und Geröllfelder, Lawinen- und Murenstriche etc. Ein Vorteil dieses Systems ist, daß es auch geeignet ist, sehr langsam verlaufende Änderungen zu detektieren, wie Geländerutschungen und Setzungsvorgänge, wobei auch hier wechselnde Beleuchtungsverhältnisse und Vegetation im allgemeinen die Meßergebnisse nicht beeinflussen.

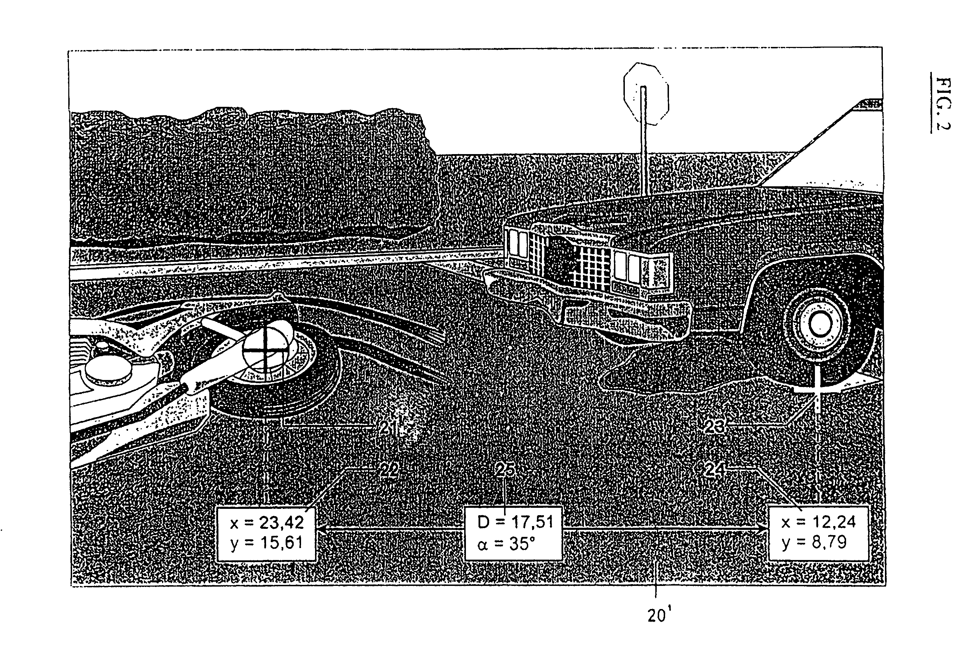

In Fig. 2 ist beispielhaft ein Monitorbild 20' mit einer Unfallszene als weiteres Ausführungsbeispiel dargestellt. Durch "Anklicken" eines ersten Objektes 21' können die Raumkoordinaten dieses Objektes in einem zu definierenden Koordinaten-System angezeigt werden. Wird ein zweiter Punkt 23 "angeklickt", können neben dessen Koordinaten 24 zusätzlich der Abstand 25 von Punkt 21' und eventuell auch die Richtung (in Bezug auf das gewählte Koordinaten-System) ausgegeben werden.

In der Regel werden von einer Szene mindestens zwei Aufnahmen gemacht, um trotz der unvermeidlichen Abschattungen von Teilen der Szene durch verschiedene darin positionierte Objekte einen vollständigen 3-D-Datenfile zu erhalten. Dadurch ist es vorteilhaft auch möglich, Vektoren zu berechnen. Bei einer ersten Auswertung werden in den verschiedenen Bildern mindestens zwei Objekte, z.B. Verkehrszeichen, Maste, Gebäudeekken etc. als ident markiert. In einem weiteren Bildauswertelauf in der Signalverarbeitungsstufe 12 können dann die Daten der verschiedenen Aufnahmen zu einem einzigen 3-D-Daten-File zusammengefaßt. Gegebenenfalls kann der Differenzdatensatz mit vorgegebenen, z.B. in einem Speicher der Auswerteeinheit 12 gespeicherten Algorithmen (z.B. Methode der kleinsten Fehlerquadrate) zur Verringerung von Fehlermöglichkeiten überprüft werden, wobei bei Überschreiten von definierten, vorzugsweise wählbaren, Grenzwerten ein Signal ausgelöst wird.

Bei Vorliegen eines solchen 3-D-Files kann bei einer späteren Auswertung die Szene zur Sichtbarmachung verschiedener Einzelheiten beliebig gedreht dargestellt werden. Es ist auch möglich, eine Draufsicht zu generieren, z.B. durch rechnerisches Drehen der Vektoren, so daß ein, vorzugsweise maßstäblicher, Lageplan des Unfallortes am Bildschirm gezeigt und auch ausgedruckt werden kann, wobei eventuell die Abstände wichtiger Punkte zusätzlich angegeben werden können.

Die Erfindung ist nicht auf die oben gezeigten Beispiele beschränkt. So kann anstelle oder zusätzlich zu dem passiven Kanal als Bildinformation auch die Amplitude der reflektierten Laser-Impulse des aktiven Kanals herangezogen werden. Da diese Bildinformation von den herrschenden Beleuchtungsverhältnissen völlig unabhängig ist, wird sie bevorzugt bei schlechter Ausleuchtung der ganzen Szene oder von Teilen derselben als Bildinformation benutzt. Gegebenenfalls werden die Amplitudensignale den Signalen des passiven Kanals überlagert.

Um die räumliche Tiefe eines Helligkeitsbildes noch besser zu verdeutlichen, kann diesem gemäß einem weiteren Merkmal der Erfindung ein an sich bekanntes Falsch-Farben-Entfernungsbild überlagert werden.

Zur Verbesserung der Aufnahmeeigenschaften des passiven Kanales bei Dunkelheit kann im Sende- oder Empfangskanal eine Beleuchtungsquelle angeordnet sein. Da der Objektraum durch die Scan-Einrichtung ebenfalls punktweise ausgeleuchtet wird, genügt in diesem Fall eine sehr geringe Leistung der Lichtquelle.

Wird bei der Aufnahme ein stark reflektierendes Objekt, z.B. eine Windschutzscheibe oder eine Wasserpfütze angemessen, deren Flächennormale mit dem Meßstrahl einen mehr oder weniger großen Winkel einschließt, so wird die Empfangseinrichtung des Entfernungsmessers von einem solchen Objekt keine Signale empfangen. Damit fehlt von diesem Objekt auch ein Entfernungswert. Solche fehlende Entfernungswerte können durch einen Interpolationsvorgang im Rechner 12 aus den Werten benachbarter Bildelemente ermittelt werden, so daß auch in solchen Ausnahmefällen ein vollständiger Datensatz erzeugt werden kann.

Im übrigen kann die Erfindung neben den oben erwähnten Anwendungen ganz allgemein für verschiedene Vermessungsaufgaben, z.B. im Bauwesen oder im Maschinenbau, eingesetzt werden. Sie kann zur Steuerung autonomer Fahrzeuge ebenso Verwendung finden, wie als Sensor in Roboter-Systemen Vor allem beim Einsatz für Vermessungsaufgaben im Bauwesen empfiehlt es sich die Anlage mit einem Navigations-System, z.B. ein GPS-Satelliten-Navigationssystem GPS zu kombinieren, so daß die Koordinaten der verschiedenen Bildpunkte in geographischen bzw. GPS-Koordinaten ausgegeben werden können.

## Patentansprüche

1. Verfahren zur Aufnahme mindestens eines Objektes bzw. eines Objektraumes, mit einem opto-elektronischen Entfernungsmesser (1) mit einer Sendeeinrichtung (2) zum Aussenden von optischen Signalen, insbesondere denen eines Lasers, und einer Empfangseinrichtung (3) zum Empfangen von optischen Signalen, insbesondere von Laserstrahlung, die von im Zielraum befindlichen Objekten reflektiert wird, wobei sowohl der Sende- (2) als auch der Empfangseinrichtung (3) optische Systeme (14, 16) vorgeschaltet sind, ferner mit einer Scan-Einrichtung (5, 9) zur Ablenkung der optischen Achsen von Sende- (2) und Empfangseinrichtung (3) in verschiedene, vorzugsweise zumindest zwei orthogonale, Richtungen, wobei die optische Achsen von Sende- (2) und Empfangseinrichtung (3) im wesentlichen parallel verlaufen, femer mit einer Auswerteeinrichtung (12), die aus der Laufzeit bzw. der Phasenlage des ausgesandten optischen Signals Entfernungswerte ermittelt, wobei ein Bildausgabe-System, z.B. ein Monitor (18) od.dgl., vorgesehen ist, dem den Entfernungswerten entsprechende Signale ebenso zuführbar sind, wie mindestens ein jedem Entfernungswert zugeordneter weiterer Wert, **dadurch gekennzeichnet, daß** dem Bildausgabe-System, z.B. dem Monitor (18) od.dgl., solche Signale zugeführt werden, daß auf dem Bildausgabe-System bzw. dem Monitor (18) Bild- bzw. Meßpunkte wiedergegeben werden, deren Koordinaten der Strahlablenkung der Scan-Einrichtung entsprechen, und daß hierfür der Entfernungswert sowie der mindestens eine weitere Wert in einem Speicher eines Rechners (12) abgelegt und, gegebenenfalls nach einer Bearbeitung im Rechner (12), dem Bildausgabe-System zur Anzeige der Bild- bzw. Meßpunkte zugeführt werden, wobei vorzugsweise für die Ermittelung von Entfernungswert und weiterem Wert eine einzige Scan-Einrichtung vorgesehen ist.

2. Verfahren nach Anspruch 1, **dadurch gekennzeichnet, daß** nach einer ersten Abtastung des Objektfeldes und Auswertung der dabei gewonnenen Daten diese als Referenz-Datensatz in einem Speicher'(20) abgelegt werden und die Datensätze folgender Abtastungen mit dem zugehörigen Referenz-Datensatz gemischt, vorzugsweise von dem Referenz-Datensatz subtrahiert, werden, wobei bevorzugt der Differenzdatensatz, insbesondere codiert, dem Referenz- oder dem aktuellen Datensatz überlagert und in Bildform, z.B. am Monitor (18), angezeigt bzw. ausgegeben wird, und daß zweckmäßig wenigstens eines der folgenden Merkmale vorgesehen ist:
a) der Mischdatensatz bzw. der Differenzdatensatz wird mit vorgegebenen Algorithmen überprüft, wobei bei Überschreiten von definierten, vorzugsweise wählbaren, Grenzwerten ein Signal ausgelöst wird;
b) bei bildhafter Ausgabe des Differenz-Datensatzes wird dieser farbcodiert ausgegeben, wobei vorzugsweise die Codierung in Falschfarben erfolgt und der Farbton eine Funktion der Entfernungsdifferenz bezogen auf die Referenzdaten darstellt.

3. Verfahren nach einem der vorhergehenden Ansprüche, **dadurch gekennzeichnet, daß** ein solcher Laserentfernungsmesser-Scanner verwendet wird, der neben dem einem Entfernungsbild auch ein aus den Amplituden der reflektierten Laserimpulse abgeleitetes Amplitudenbild liefert, bzw. bei welchem nach der Scan-Einrichtung aus dem Strahlengang von Sende- und/oder Empfangseinrichtung ein Helligkeits- und/oder Farbsignal abgeleitet wird und diese Signale in ihrer Gesamtheit ein Helligkeits- bzw. Farbbild definieren, und daß vorzugsweise bei bildhafter Ausgabe des Misch- bzw. Differenzdatensatzes über eine Bildausgabe, wie einen Monitor (18) od. dgl., das Misch- bzw. Differenzbild einem Amplituden- bzw. Helligkeits- oder Farbbild überlagert wird.

4. Verfahren nach einem der vorhergehenden Ansprüche, **dadurch gekennzeichnet, daß** neben dem Datensatz des Entfernungsbildes als weitere Referenz gleichzeitig auch der Datensatz des Amplituden- bzw. Helligkeits- oder Farbbildes in separaten Speichern (in 12) abgelegt wird, wobei für beiden Bildtypen je ein Differenzbild ermittelt wird, welches angezeigt oder ausgegeben wird.

5. Verfahren nach Anspruch 3 oder 4, **dadurch gekennzeichnet, daß** mittels des Rechners (12) für verschiedene, ausgewählte Bildpunkte bzw. -elemente deren Raumkoordinaten in Bezug auf den Standort der Meßeinrichtung (1) bzw. eines im Objektraumes definierten Punktes als zugeordnete Referenz ausgebbar sind und/oder die Abstände definierter Punkte, eventuell vektoriell, berechnet und angezeigt werden bzw. durch Koordinaten-Transformation das Bild'aus einem anderen Blickwinkel dargestellt wird.

6. Verfahren nach einem der vorhergehenden Ansprüche, **dadurch gekennzeichnet, daß** ein Helligkeits-Bild aus den Amplituden der empfangenen optischen Signale des Entfernungsmessers (1) abgeleitet wird.

7. Verfahren nach einem der vorhergehenden Ansprüche, **dadurch gekennzeichnet, daß** mindestens eines der folgenden Merkmale vorgesehen ist:
a) im Strahlengang der Sende- (2) und/oder der Empfangseinrichtung (3) ist mindestens eine zusätzliche optische Empfangseinrichtung (15) vorgesehen wobei deren spektrale Empfindlichkeit von der der optischen Empfangseinrichtung (3) des Entfernungsmessers (1) abweicht;
b) bei für ein Bildelement fehlendem Entfernungswert wird dieser aus den als eine Referenz dienenden Werten benachbarter Bildelemente interpoliert.

8. Verfahren nach einem der vorhergehenden Ansprüche, **dadurch gekennzeichnet, daß** aus den Entfernungswerten ein Entfernungsbild generiert und, z.B. in Falschfarben, am Bildausgabe-System (18) dargestellt wird und diesem Entfernungsbild deckungsgleich ein weiteres Bild, insbesondere ein Helligkeitsbild, überlagert wird, wobei vorzugsweise das Entfernungsbild und das überlagerte weitere Bild unabhängig voneinander bezüglich Helligkeit, Kontrast und/oder Farbcharakter einstellbar sind.

9. Vorrichtung zur Aufnahme eines Objektes bzw. eines Objektraumes zur Durchführung des Verfahrens nach einem der vorhergehenden Ansprüche mit einem opto-elektronischen Entfernungsmesser (1) mit einer Sendeeinrichtung (2) zum Aussenden von optischen Signalen, insbesondere solchen eines Lasers, und einer Empfangseinrichtung (3) zum Empfangen von optischen Signalen, insbesondere von Laserstrahlung, die von im Zielraum befindlichen Objekten reflektiert wird, wobei sowohl der Sende- (2) als auch der Empfangseinrichtung (3) optische Systeme (14, 16) vorgeschaltet sind, femer mit einer Scan-Einrichtung (5, 9) zur Ablenkung der optischen Achsen von Sende- (2) und Empfangseinrichtung (3) in, vorzugsweise zwei, Richtungen, wobei die optische Achsen von Sende- (2) und Empfangseinrichtung (3) im wesentlichen parallel verlaufen, ferner mit einer Auswerteeinrichtung (12), die aus der Laufzeit bzw. der Phasenlage des ausgesandten optischen Signals Entfernungswerte ermittelt, wobei ein Bildausgabe-System, z.B. ein Monitor (18) od.dgl., vorgesehen ist, auf welchen Bildelemente wiedergegeben werden, deren Koordinaten der Strahlablenkung der Scan-Einrichtung (5, 9) entsprechen, **dadurch gekennzeichnet, daß** - z.B. zur Dokumentation der Situation nach einem Verkehrs-Unfall - nach der Scan-Einrichtung (5, 9) im Strahlengang von Sende- (2) und/oder Empfangseinrichtung (3) mindestens ein Strahlenteiler (14) vorgesehen ist, durch welchen ein Teil der einfallenden Strahlung mindestens einem Photoempfänger (3 bzw. 15) zuführbar ist und vorzugsweise zwischen Strahlenteiler (14) und Photoempfänger (3 bzw. 15) zur Anpassung der spektralen Empfindlichkeit ein Farbfilter (16) vorgesehen ist, wobei gegebenenfalls zur Erhöhung der Empfindlichkeit in Kombination mit dem Photoempfänger (3 bzw. 15) ein Bildverstärker eingesetzt ist.

10. Vorrichtung nach Anspruch 9, **dadurch gekennzeichnet, daß** wenigstens eines der folgenden Merkmale vorgesehen ist:
a) das Bildschirmausgabe-System (18) ist in an sich bekannter Weise mit einer Einrichtung zum Markieren von Bildelementen ausgestattet;
b) die Vorrichtung umfaßt einen Kompaß, insbesondere einen Digitalkompaß und/ oder einen Neigungssensor, so daß bei der Bildauswertung ein als Referenz dienendes Koordinaten-System bezogen auf den Standort der Vorrichtung definierbar ist;
c) die Vorrichtung umfaßt in an sich bekannter Weise ein Navigations-System zur Bestimmung der Standort-Position der Vorrichtung, insbesondere ein Satelliten-Navigations-System nach dem Global Positioning System GPS.

## Claims

1. A method for recording at least one object or an object space comprising an optoelectronic rangefinder (1) which includes a transmission device (2) for transmitting optical signals, in particular those of a laser, and a receiving device (3) for receiving optical signals, in particular of laser radiation, which is reflected by objects located in the target area, optical systems (14, 16) being mounted upstream of both the transmission (2) and the receiving device (3), furthermore including a scanning device (5, 9) for deflecting the optical axes of the transmission (2) and receiving devices (3) in different, preferably at least two, orthogonal directions, the optical axes of the transmission (2) and receiving devices (3) being substantially parallel, moreover including an evaluation unit (12) which determines distance values from the transit time or the phase position of the transmitted optical signal, an image outputting system, e.g. a monitor (18) or the like being provided to which signals corresponding to the distance values can be supplied, as well as at least one further value assigned to each distance value, **characterised in that** such signals are supplied to the image outputting system, e.g. the monitor (18) or the like, **in that** image points or measuring points are reproduced by the image outputting system or the monitor (18), the coordinates of which correspond to the beam deflection of the scanning device, and **in that** the distance value as well as the at least one further value are stored in a memory of a calculator (12), and the image outputting system is supplied with image points or measuring points for display, optionally after processing in the calculator (12), a single scanning device preferably being provided for determining the distance value and the further value.

2. A method according to Claim 1, **characterised in that** after a first scan of the object field and evaluation of the data obtained thereby, said data are stored as a set of reference data in a memory (20), and the sets of data of following scans are merged with the associated set of reference data, preferably subtracted from the set of reference data, the set of differential data, in particular in coded form, being preferably superimposed on said set of reference data or on the set of actual data, and being displayed or outputted in the form of an image, e.g. on the monitor (18), and **in that** suitably at least one of the following properties is provided:
a) the set of merged data or the set of differential data is examined with predefined algorithms, a signal being triggered if defined, preferably selectable, limit values are exceeded;
b) the set of differential data, when displayed as an image, is displayed in colour-coded form, the coding preferably being executed in false colours and the colour hue representing a function of the difference of distance in relation to the reference data.

3. A method according to one of the preceding claims, **characterised in that** a laser rangefinder scanner is used which supplies an amplitude image derived from the amplitudes of the reflected laser pulses in addition to the distance image, or in which a luminance signal and/or chrominance signal is derived after the scan device from the beam path of the transmission and/or receiving device, these signals, in total, defining a luminance and/or colour image, and **in that** preferably, when the merged set of data or the set of differential data is displayed as an image by means of image outputting device, such as a monitor (18) or the like, the merged or differential image is superimposed on an amplitude or luminance or colour image.

4. A method according to one of the preceding claims, **characterised in that**, in addition to the set of data of the distance image, the set of data of the amplitude or luminance or colour image is simultaneously stored in separate memories (in 12) as a further reference, a differential image being in each case determined for both types of images and being displayed or outputted.

5. A method according to Claim 3 or 4, **characterised in that** the spatial coordinates of different, selected image points or image elements in relation to the location of the measuring device (1) or of a point defined in the object space can be outputted by means of the calculator (12) as an associated reference, and/or the distances of defined points are calculated and displayed, optionally in a vectorial form, or the image is displayed from a different viewing angle by means of coordinate transformation.

6. A method according to one of the preceding claims, **characterised in that** a luminance image is derived from the amplitudes of the received optical signals of the rangefinder (1).

7. A method according to one of the preceding claims, **characterised in that** at least one of the following features is provided:
a) in the beam path of the transmission (2) and/or receiving device (3) at least one additional optical receiving device (15) is provided, the spectral sensitivity of which deviates from that of the optical receiving device (3) of the rangefinder (1);
b) in case of a distance value which is missing for an image element, said value is interpolated from the values of adjacent image elements which serve as a reference.

8. A method according to one of the preceding claims, **characterised in that** a distance image is generated from the distance values and is displayed, e.g. in false colours, by the image outputting system (18), and a further image, in particular a luminance image, is superimposed on this distance image in a congruent manner, the distance image and the superimposed further image being preferably adjustable independently of one another with respect to luminance, contrast and/or colour characteristics.

9. An apparatus for recording an object or an object space for carrying out the method according to one of the preceding claims, comprising an optoelectronic rangefinder (1) which includes a transmission device (2) for transmitting optical signals, in particular those of a laser, and a receiving device (3) for receiving optical signals, in particular of laser radiation, which is reflected by objects located in the target area, optical systems (14, 16) being mounted upstream of both the transmission (2) and the receiving device (3), furthermore including a scanning device (5, 9) for deflecting the optical axes of the transmission (2) and receiving devices (3) in preferably two directions, the optical axes of the transmission (2) and receiving devices (3) being substantially parallel, moreover including an evaluation unit (12) which determines distance values from the transit time or the phase position of the transmitted optical signal, an image outputting system, e.g. a monitor (18) or the like being provided, on which image elements are reproduced the coordinates of which correspond to the beam deflection of the scanning device (5, 9), **characterised in that,** e.g. for documentation of the situation after a traffic accident, at least one beam splitter (14) is provided after the scanning device (5, 9) in the beam path of the transmission (2) and/or receiving device (3), by means of which beam splitter (14) a part of the incident radiation can be supplied to at least one photoreceiver (3 or 15), and a colour filter (16) is preferably provided between the beam splitter (14) and the photoreceiver (3 or 15) for adapting the spectral sensitivity, an image amplifier being optionally provided in combination with the photoreceiver (3 or 15) for increasing the sensitivity.

10. An apparatus according to Claim 9, **characterised in that** at least one of the following features is present:
a) the screen display system (18) is equipped in a manner known as such with a device for marking image elements;
b) the apparatus includes a compass, in particular a digital compass, and/or an inclination sensor, so that a coordinate system which serves as a reference for image evaluation can be defined in relation to the location of the apparatus;
c) the apparatus includes in a manner known as such a navigation system for determining the positional location of the apparatus, in particular a satellite navigation system according to the GPS Global Positioning System.

## Revendications

1. Procédé d'enregistrement d'au moins un objet ou un espace objet, avec un télémètre (1) optoélectronique, avec un dispositif émetteur (2) pour envoyer des signaux optiques, en particulier ceux d'un laser, et un dispositif récepteur (3) pour capter des signaux optiques, en particulier du rayonnement laser, qui a été réfléchi par des objets se trouvant dans l'espace objet, des systèmes optiques (14, 16) étant installés en amont tant du dispositif émetteur (2), qu'également du dispositif récepteur (3), en outre avec un dispositif scanneur (5, 9) pour dévier les axes optiques du dispositif émetteur (2) et récepteur (3) dans différentes directions de préférence au moins deux directions orthogonales, les axes optiques du dispositif émetteur (2) et récepteur (3) s'étendant sensiblement parallèlement, en outre avec un dispositif d'évaluation (12), qui détermine des valeurs d'éloignement à partir du temps de parcours ou de la position en phase du signal optique émis, un système d'édition d'images, par exemple un moniteur (18) ou analogue étant prévu, auquel sont amenés également des signaux correspondants aux valeurs d'éloignement, ainsi qu'au moins une autre valeur, associée à chaque valeur d'éloignement, **caractérisé en ce que** l'on amène au système d'édition d'images, par exemple au moniteur (18) ou analogue, des signaux de manière à restituer sur le système d'édition d'images ou sur le moniteur (18) des points image ou points de mesure dont les coordonnées correspondent à la déviation de rayon du dispositif scanneur ; et **en ce que**, pour cela, la valeur d'éloignement ainsi que la au moins une autre valeur sont placées dans une mémoire d'un calculateur (12), le cas échéant après traitement dans le calculateur (12), sont amenées au système d'édition d'images pour affichage des points image ou points de mesure, sachant que, de préférence, un dispositif scanneur unique est prévu pour la détermination de la valeur d'éloignement et de l'autre valeur.

2. Procédé selon la revendication 1, **caractérisé** qu'après une première scrutation du champ objet et évaluation des données alors obtenues, celles-ci sont placées, en tant que jeu de données de référence, dans une mémoire (20), et les jeux de données des scrutations suivantes sont mélangés aux jeux de données de référence afférents, de préférence soustraits du jeu de données de référence, sachant que, de préférence, le jeu de données de différence, en particulier codé, est superposé au jeu de données de référence ou au jeu de données actuel et affiché ou édité sous forme d'images, par exemple sur le moniteur (18), et en ce que, de manière appropriée, au moins l'une des caractéristiques suivantes est prévue :
a) le jeu de données mélangé ou le jeu de données de différence est contrôlé à l'aide d'algorithmes prédéterminés, un signal étant déclenché en cas de dépassement de valeurs limites définies, de préférence sélectionnables ;
b) en cas d'édition sous forme image du jeu de données de différence, celui-ci est édité avec un codage de couleur, de préférence le codage se faisant en de fausses couleurs et la tonalité de couleur constituant une fonction de la différence de distance par rapport aux données de référence.

3. Procédé selon l'une des revendications précédentes, **caractérisé en ce qu'**on utilise un scanneur de télémètre à laser qui, outre une image d'éloignement, fournit également une image d'amplitude dérivée des amplitudes des impulsions laser réfléchies, respectivement pour lequel, après le dispositif scanneur, à partir du trajet des rayons du dispositif émetteur et/ou récepteur, on dérive un signal de luminosité et/ou de couleur et ces signaux, en leur totalité, définissent une image de luminosité ou de couleur et **en ce que** de préférence en cas d'édition sous forme d'image du jeu de données mélangé ou de différence, par l'intermédiaire d'une édition d'image tel qu'un moniteur (18) ou analogue, l'image de mélange ou de différence est superposée à une image d'amplitude ou de luminosité ou de couleur.

4. Procédé selon l'une des revendications précédentes, **caractérisé en ce que**, outre le jeu de données de l'image d'éloignement, on place dans une mémoire séparée (en 12), à titre d'autres références, simultanément également le jeu de données de l'image d'amplitude de luminosité ou de couleur, sachant que, chaque fois, on détermine pour les deux types d'images une image de différence qui est affichée ou éditée.

5. Procédé selon la revendication 3 ou 4, **caractérisé en ce que**, au moyen du calculateur (12), pour différents points ou éléments d'image sélectionnés, on peut éditer leurs coordonnées spatiales en se référant au site du dispositif de mesure (1) ou d'un point défini dans l'espace objet, en tant que référence associée et/ou les espacements de points définis sont calculés, éventuellement de façon vectorielle, et affichés, ou bien l'image, obtenue depuis un autre angle d'observation, est représentée, par transformation de coordonnées.

6. Procédé selon l'une des revendications précédentes, **caractérisé en ce qu'**une image de luminosité est dérivée des amplitudes des signaux optiques captés du télémètre (1).

7. Procédé selon l'une des revendications précédentes, **caractérisé en ce qu'**au moins l'une des caractéristiques suivantes est prévue :
a) dans le trajet des rayons, du dispositif émetteur (2) et/ou récepteur (3) est prévu au moins un dispositif récepteur (15) optique supplémentaire, sachant que sa sensibilité spectrale diffère de celle du dispositif récepteur optique (3) du télémètre (1) ;
b) pour une valeur d'éloignement manquant pour un élément image, celle-ci est obtenue par interpolation à partir des valeurs, servant de référence, d'éléments d'image voisins.

8. Procédé selon l'une des revendications précédentes, **caractérisé en ce que**, à partir des valeurs d'éloignement, on génère une image d'éloignement et on la représente, par exemple en fausse couleur, sur le système d'édition d'images (18) et on superpose à cette image d'éloignement, en coïncidence, une autre image, en particulier une image de luminosité, sachant que, de préférence, l'image d'éloignement et l'autre image superposée sont réglables indépendamment de l'autre, quant à la luminosité, le contraste et/ou le caractère chromatique.

9. Dispositif d'enregistrement d'un objet ou d'un espace objet pour la mise en oeuvre du procédé selon l'une des revendications précédentes, avec un télémètre (1) optoélectronique, avec un dispositif émetteur (2) pour l'envoi de signaux optiques, en particulier ceux venant d'un laser, et un dispositif récepteur (3) pour recevoir des signaux optiques, en particulier d'un rayonnement laser, ayant été réfléchi par des objets se trouvant dans l'espace cible, des systèmes optiques (14, 16) étant installés en amont tant du dispositif émetteur (2), qu'également du dispositif récepteur (3), en outre avec un dispositif scanneur (5, 9) pour dévier les axes optiques du dispositif émetteur (2) et récepteur (3) en de préférence deux directions, les axes optiques du dispositif émetteur (2) et récepteur (3) s'étendant sensiblement parallèlement, en outre avec un dispositif d'évaluation (12) qui, à partir du temps de parcours ou de la position en phase du signal optique émis, détermine des valeurs d'éloignement, un système d'édition d'images, par exemple un moniteur (18) ou analogue, étant prévu, sur lequel sont restitués des éléments d'image dont les coordonnées correspondent à la déviation de rayons du dispositif scanneur (5, 9), **caractérisé en ce que** - par exemple pour produire une documentation de la situation après un accident de la circulation - en aval du dispositif scanneur (5, 9), dans le trajet des rayons du dispositif émetteur (2) et/ou récepteur (3), est prévu au moins un diviseur de rayon (14), au moyen duquel une partie du rayonnement incident est susceptible d'être amenée à au moins un photorécepteur (3 ou 15) et, de préférence, entre le diviseur de rayon (14) et le photorécepteur (3 ou 15), est prévu un filtre chromatique (16) pour adapter la sensibilité spectrale, le cas échéant un amplificateur d'image étant mis en oeuvre dans le but d'augmenter la sensibilité, en combinaison avec le photorécepteur (3 ou 15).

10. Dispositif selon la revendication 9, **caractérisé en ce qu'**au moins l'une des caractéristiques suivantes est prévue :
a) le système d'édition sur écran (18) est, de manière connue en soi, muni d'un dispositif de marquage d'éléments image ;
b) le dispositif comprend un compas, en particulier un compas numérique et/ou un capteur d'inclinaison, de sorte que, lors de l'évaluation d'image, on puise définir un système de coordonnées servant de référence, se référant au site géographique du dispositif ;
c) le dispositif comprend de manière connue en soi un système de navigation devant déterminer la position du site géographique du dispositif, en particulier un système de navigation par satellite selon le Global Positioning System GPS.
